# EUROPEAN PATENT APPLICATION

(11) **EP 2 383 926 A1**
(43) Date of publication of application: **02.11.2011**
(21) Application number: 11002793.5
(22) Date of filing: 04.04.2011
(51) Int. Cl.: H04L 5/00

(54) **Consistent interpretation method on carrier indication field and related communication device**

(30) Priority: 02.04.2010 US 320330 P; 01.04.2011 US 78010
(71) Applicant: HTC Corporation, Taoyuan County 330 (TW)
(72) Inventor: Li, Chi-Fang, Taoyuan City Toayuan County 330 (TW)
(74) Representative: Wagner, Karl H.

(57) **Abstract**

A consistent interpretation method on a carrier indication field (CIF) in a wireless communication system is disclosed. The method comprises building up a first common set of a plurality of component carriers between a mobile station and a base station according to a specific order; and addressing the plurality of component carriers according to the first common set. One CIF value corresponds to one of the plurality component carriers or be left unused.

## Description

### Cross Reference To Related Applications

This application claims the benefit of U.S. Provisional Application No. 61/320,330, filed on April 02, 2010 and entitled "Method and Apparatus for Carrier Indication, Index, and Addressing in Communication Systems", the contents of which are incorporated herein.

### Background of the Invention

### 1. Field of the Invention

The application relates to a method used in a wireless communication system and related communication device, and more particularly, to a consistent interpretation method on a carrier indication field in a wireless communication system and related communication device.

### 2. Description of the Prior Art

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, an evolved universal terrestrial radio access network (E-UTRAN) includes a plurality of evolved Node-Bs (eNBs) and communicates with a plurality of mobile stations, also referred as user equipments (UEs). The LTE radio protocol stack includes the Layer 3, also known as the Radio Resource Control (RRC) layer, the Layer 2, consisting of three sub-layers that are the Packet Data Convergence Protocol (PDCP) layer, the Radio Link Control (RLC) layer, and the Medium Access Control (MAC) layer, and the Layer 1, also known as the Physical (PHY) layer.

A long term evolution-advanced (LTE-A) system, as its name implies, is an evolution of the LTE system, considering relaying for cost-effective throughput enhancement and coverage extension. The LTE-A system includes all of the features of the LTE system and several new ones, the most important of which are: carrier aggregation, enhanced multi-antenna support and relaying. The LTE system provides extensive support for deployment in spectrum allocations of various characteristics, with transmission bandwidths ranging from 1.4 MHz up to 20MHz. In the LTE-A system, the transmission bandwidth can be further extended with carrier aggregation wherein multiple component carriers are aggregated and jointly used for transmission to/from a signal UE. In general, up to five component carriers can be aggregated, allowing for transmission bandwidth up to 100MHz.

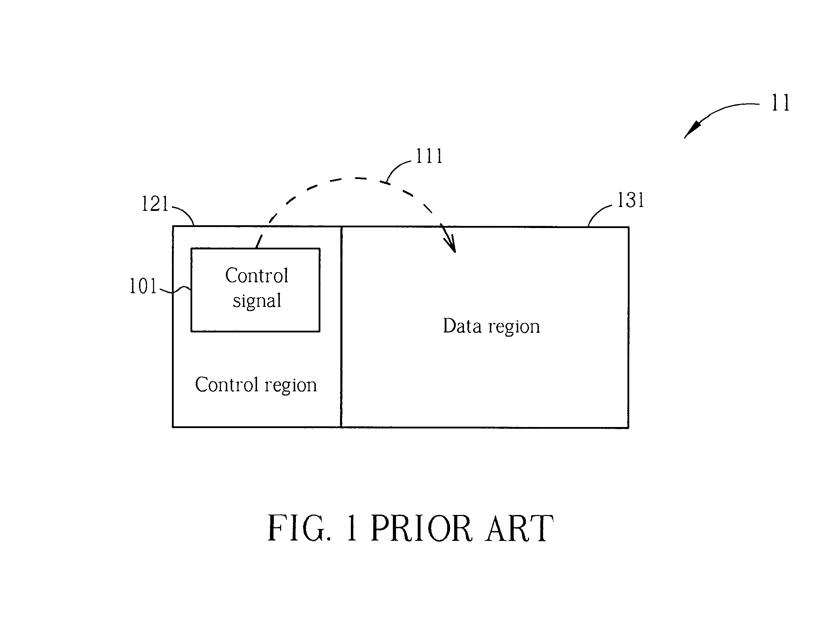

Please refer to FIG. 1. FIG. 1 is a diagram illustrating a carrier. As shown in FIG. 1, a carrier 11 has a control region 121, a data region 131, and a carrier indicator 111. The control region 121 carries one or multiple control signals, e.g. the control signal 101. The data region carries system data, user data, and/or other information. The carrier indicator 111 indicates that the carrier 11 is the carrier on which the data region 131 is controlled by control signals, e.g. the control signal 101, in the control region 121. In the LTE/LTE-A system, a control region corresponds to the physical downlink control channel (PDCCH); a data region corresponds to physical downlink shared channel (PDSCH); the control signals controls with carrier indications corresponds to downlink control informations (DCls).

Cross-carrier scheduling is used to schedule data on all the component carriers in each cell layer, subject to the normal inter-cell interference coordination (ICIC) mechanism. Essentially, this creates a frequency reuse for control signaling, while still allowing terminals to dynamically utilize the full bandwidth (and thereby supporting the highest data rates) for the data part. The cross-carrier scheduling can be done by adding a carrier indication field (CIF) to downlink control information (DCI) (e.g. control signal 101). While the CIF is used as an index to indicate which carrier a control signal is dedicated to, it is necessary to negotiate between the eNB and the UE on scope of CIF indication. However, there is no consistent interpretation on CIF at both the eNB and the UEs. It is not clear how to build up this consistent interpretation.

### Summary of the Invention

A consistent interpretation method on a carrier indication field in a wireless communication system and a related communication device are provided.

A consistent interpretation method on a carrier indication field (CIF) in a wireless communication system is disclosed. The method comprises building up a first common set of a plurality of component carriers between a mobile station and a base station according to a specific order; and addressing the plurality of component carriers according to the first common set; wherein, one CIF value corresponds to one of the plurality component carriers or be left unused.

A wireless communication system is disclosed. The wireless communications comprises means for building up a first common set of a plurality of component carriers between a mobile station and a base station according to a specific order; and means for addressing the plurality of component carriers according to the first common set; wherein, one CIF value corresponds to one of the plurality component carriers or be left unused.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a diagram illustrating a carrier.

FIG. 2 is a schematic diagram of a wireless communication system.

FIG. 3 is a schematic diagram of a communication device.

FIG. 4 is a flowchart of an exemplary process.

FIGs.5-8 illustrate carrier indicate fields and common sets.

### Detailed Description

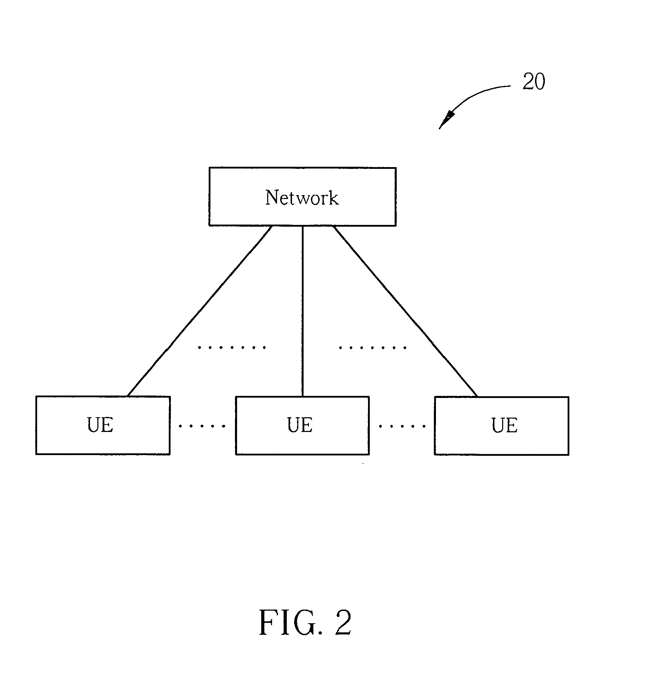

Please refer to FIG. 2. FIG. 2 is a schematic diagram of a wireless communication system 20 of the present disclosure. The wireless communication system 20 can be an LTE-Advanced system, or other mobile communication systems (e.g. LTE, WCDMA, HSPA, GSM, EDGE, etc.). The wireless communication system 20 is briefly composed of a network and a plurality of user equipments (UEs), as the structure illustrated in FIG. 2. In the LTE-Advanced system, the network is referred as an evolved universal terrestrial radio access network (E-UTRAN) comprising a plurality of evolved base stations (eNBs). The UEs can be devices such as mobile phones, computer systems, etc. Besides, the network and the UE can be seen as a transmitter or receiver according to transmission direction, e.g., for uplink (UL), the UE is the transmitter and the network is the receiver, and for downlink (DL), the network is the transmitter and the UE is the receiver.

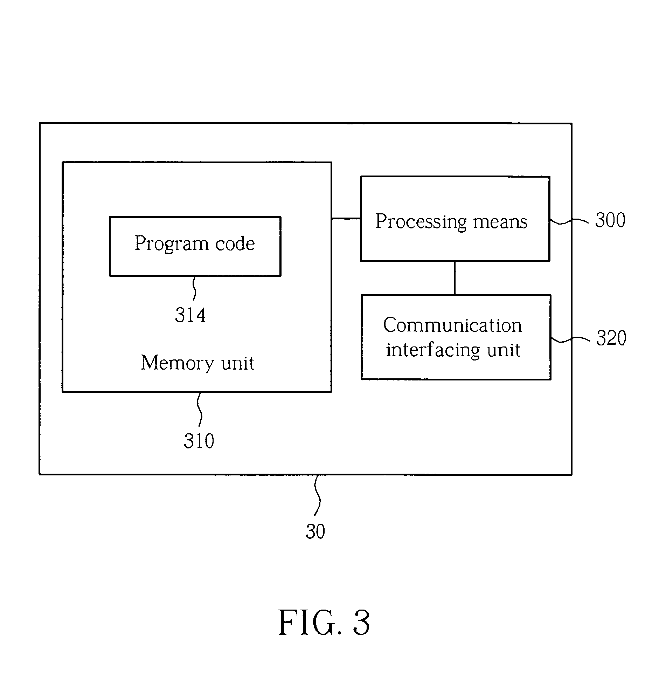

Please refer to FIG. 3. FIG. 3 is a schematic diagram of an exemplary communication device 30. The communication device 30 can be the UE or the network shown in FIG. 2 and may include a processing means 300 such as a microprocessor or ASIC, a memory unit 310, and a communication interfacing unit 320. The memory unit 310 may be any data storage device that can store program code 314 for access by the processing means 300. Examples of the memory unit 310 include but are not limited to a subscriber identity module (SIM), read-only memory (ROM), random-access memory (RAM), CD-ROMs, magnetic tapes, floppy disks, and optical data storage devices. The communication interfacing unit 320 is preferably a radio transceiver for wirelessly communicating with the network according to processing results of the processing means 300.

In the present disclosure, wired or wireless communication channels are represented by "carriers" for wording convenience and simplicity. The UEs are usually accessed through one of carriers and each carrier has its own control signals corresponding to the carrier itself. While the UEs make use of more than one carrier, control signals for these used carriers might be transferred by one or more than one of these used carriers. That means control signals transmitted on a carrier might carry control messages or data for the transmission carrier and/or one or multiple other carriers. The following description describes consistent interpretation method on a carrier indication field (CIF) in the wireless communication system 20. The CIF indicates which carrier a control signal is dedicated to. Preferably, the CIF has length of 3 bits, but not limited herein. Each value of the CIF may correspond to one component carrier.

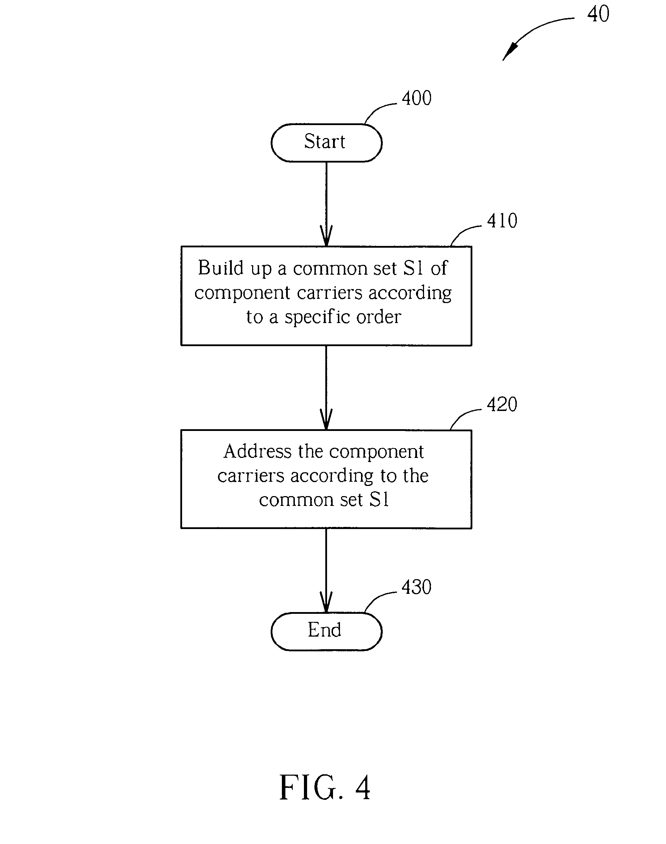

Please refer to FIG. 4, which is a flowchart of an exemplary process 40. The process 40 is utilized for consistent interpretation on the CIF for the UE and the network in the wireless communication system 20. The process 40 comprises the following steps:

Step 410: Start.

Step 420: Build up a common set S1 of component carriers according to a specific order.

Step 430: Address the component carriers according to the common set S1.

Step 430: End.

According to the process 40, the UE and the network both build up the common set S1 of the component carries. The common set S1 is used for both of the UE and the network. The component carriers in the common set S1 are arranged according to the specific order. The CIF may address the component carriers sequentially within the common set S1. Therefore, the interpretations of the CIF in both of the UE and the network side are consistent. Please note that the number of the component carries in the common set S1 is not fixed, all values of the CIF may be assigned to the component carries, but it is not necessary.

In addition, when any of the component carriers is no long be used by the UE and the network, the UE and the network may remove that unused component carrier from the common set S1. The CIF value mapping to the removed CC can be left unused or assigned to another component carrier if needed.

The component carriers are arranged according to the specific order. The specific order may be an activation order, a frequency order, a deployment order or an operator's preference order. The order between these component carriers exists as a system parameter. The network uses this parameter and UE capability/activation status to select a common set for CIF mapping. If the specific order is the activation order, the common set S1 may be formed according to an order that the component carriers are activated in the UE. For example, the first enabled carrier is arranged as the first carrier in the common set S1. By the same token, the second enabled carrier is arranged as the second carrier in the common set S1. If the specific order is the frequency order, the common set S1 may be formed according to carrier frequencies. For example, the lowest frequency carrier is arranged as the first carrier in the common set S1 and the second one follows in order. Or the highest frequency carrier is arranged as the first carrier in the common set S1 and the second follows in order. If the specific order is the deployment order, the common set S1 may be formed according to the deployment. For example, the first deployed carrier is arranged as the first carrier in the common set S1. By the same token, the second deployed carrier is arranged as the second carrier in the common set S1. Apart from aforementioned examples, the common set S1 may be also formed according to operator's preference. For example, the operator may arrange a preferable carrier as the first carrier in the common set S1. The operator's preference order may be obtained from a base station, user cards, etc.

In some example, the number of component carriers may be more than the CIF can represent. In this situation, multiple common sets can be built up. With multiple common sets, more component carriers could be accommodated, not being limited to the length of the CIF. For example, the 3-bit CIF only have eight different values, the common set S1 therefore accommodates eight component carriers. If the number of the component carrier is up to ten, a common set S2 is built up to accommodate two extra component carriers. The number of the component carriers in the comment set S1 and the common set S2 may be allocated arbitrarily. For example, the common set S1 may include four of the component carriers while the common set S2 may include six of the component carriers, and the other way around.

The common set S1 and the common set S2 may be formed accruing to frequency bands. For example, the component carriers in one or several frequency bands compose the common carrier set S1. The common set S2 should be composed of the component carriers on different frequency bands. Also, the multiple common sets (e.g. common set S1 and common set S2) may be formed according to operator/user preference. In other words, the component carriers are selected by the operator/user.

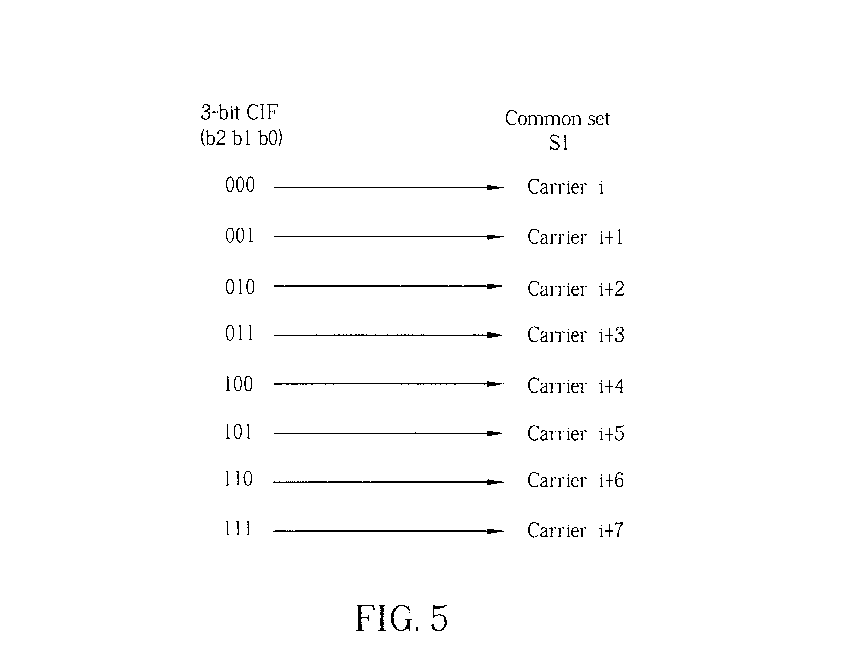

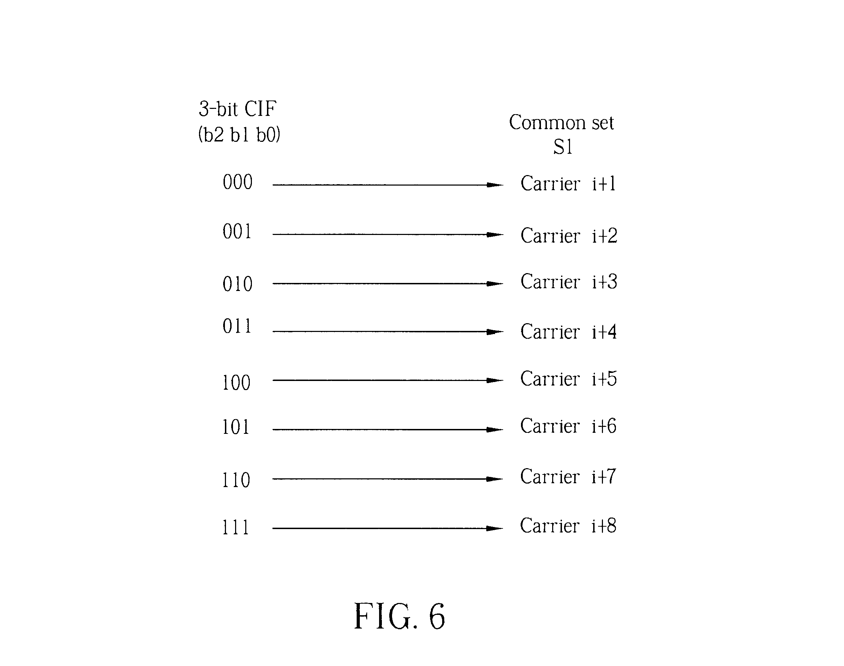

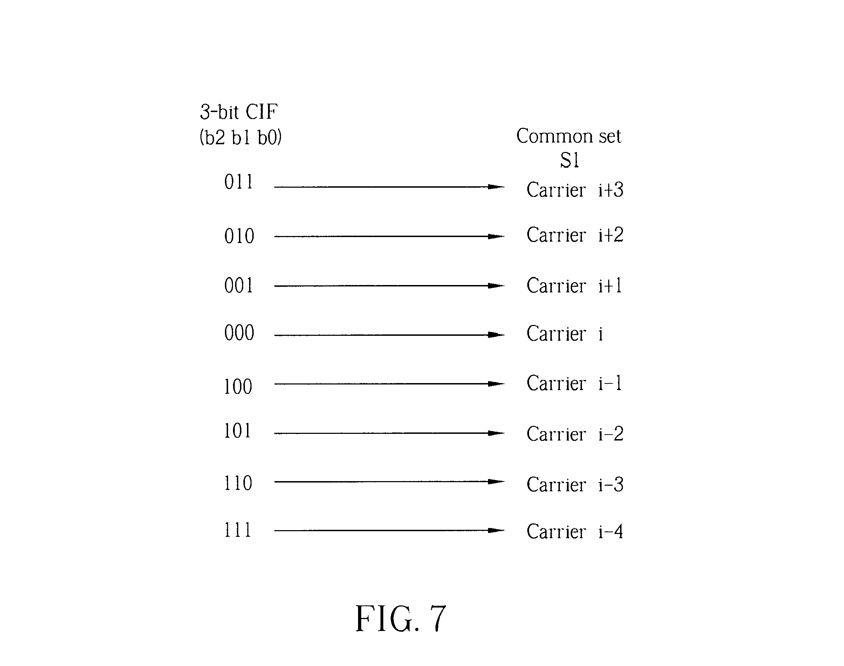

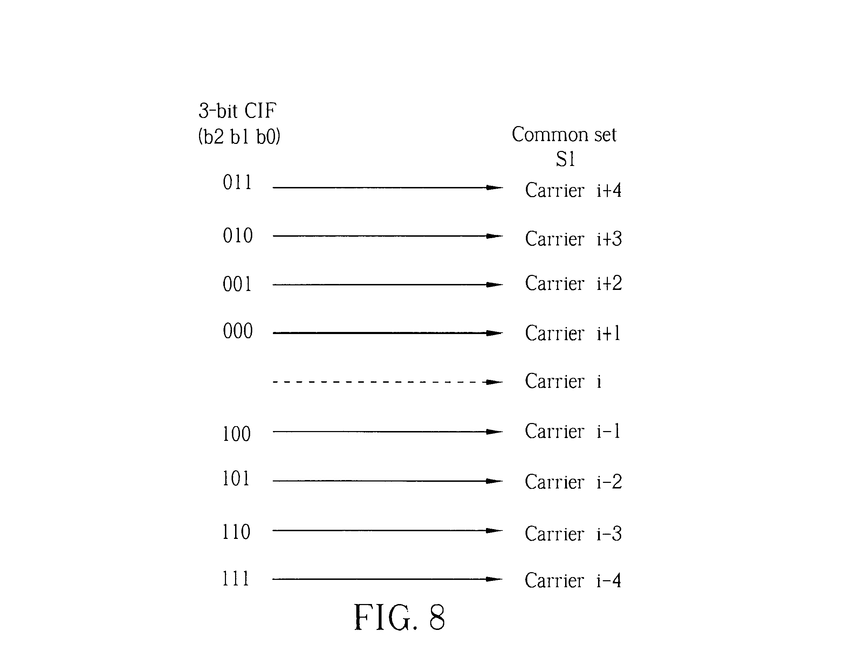

After arranging the component carriers in the common set S1, mapping the CIF values to the component carriers should be taken into consideration as well. Taking the aforementioned 3-bits CF as an example, please refer to FIGs.5-8, which illustrate the CIF and the common set S1 according to examples of the present disclosure. The CIF has a length of 3 bits, which represents eight values, starting from 000,001,010, 011,...,111. Each of the values corresponds to one component carrier. Totally, there are eight component carriers i,i+1,i+2,...,i+7 in the common set S1. In FIG.5, the CIF is mapped to the common set S1 according to an ascending order of the CIF values. The value 000 represents the first component carrier (carrier i) in the common carrier set S1. The value 001 represents the second component carrier (carrier i+1). The rest of the values can be mapped in the same manner. In FIG.6, the CIF is mapped to the common set S1 according to the ascending order of the CIF values and an offset. The value 000 represents one carrier offset from the carrier i, which transmits a control signal containing the CIF in the common set S1. The value 001 represents 2 carriers offset from the carrier i. By the same token, the rest of values can be mapped to the component carriers. In FIG.7, the CIF is mapped to the common set S1 according to two's complement. The value 000 represents the carrier i, which transmits a control signal containing the CIF. As shown in Fig. 7, the value 001 represents "1" carrier offset in positive direction in the common set S1. The value 001 represents the (*i+1*)-th carrier within the common set S1. The value 100 represents the (*i-1*)-th carrier within the common set S1. The most significant bit, e.g. b2, of the CIF is interpreted as offset direction and the rest bit(s) are offset values. Thus, the CIF can indicate its neighbor carriers and the range of indication depends on bit width of the CIF. The method can apply to any numbers of bits in the CIF. In FIG.8, the CIF is mapped to the common set S1 according to two's complement and an offset. The value 000 represents "1" carrier offset in positive direction in the common set S1. As shown in Fig.8, the value 001 represents the (i+2)-th carrier within the common set S1.The value 100 represents the (i-1)-th carrier within the common set S1. The most significant bit, e.g. b2, of CIF is interpreted as offset direction and the rest bit(s) are "offset values minus 1". By this method, CIF can indicate its neighbor carriers and the range of indication depends on bit width of the CIF. The method can apply to any numbers of bits in CIF. There is no CIF value mapping to the carrier transmitting a control signal containing the CIF itself. It will be treated as a default and given interpretation in case of no CIF field. Please note that it is not necessary to have 8 component carriers in aforementioned examples. The unused CIF value(s) can be reserved.

Please note that the abovementioned steps including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 30 in which the processing means processes the program code 314 related to the abovementioned processes and the processed results can interpret the CIF consistently in the wireless communications system 30.

To sum up, according to the process 40 and aforementioned examples, the UE can the network (base station) can interpret the CIF consistently. Then the CIF can address the correct component carrier which the control signal is dedicated to. In addition, the mapping between the CIF and the component carries is also concerned in the present disclosure. Various mapping methods are depicted in the examples, but not limited herein.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A consistent interpretation method on a carrier indication field (CIF) in a wireless communication system, the CIF comprise a plurality of CIF values, the method comprising:
building up a first common set of a plurality of component carriers between a mobile station and a base station according to a specific order; and
addressing the plurality of component carriers according to the first common set;
wherein, one CIF value corresponds to one of the plurality component carriers or be left unused.

2. The consistent interpretation method of claim 1, wherein the specific order is an activation order, a frequency order, a deployment order or an operator's preference order.

3. The consistent interpretation method of claim 2 further comprising arranging a first enabled component carrier as a first component carrier in the first common set when the specific order is the activation order.

4. The consistent interpretation method of claim 2 further comprising arranging a lowest frequency component carrier as a first component carrier in the first common set when the specific order is the frequency increasing order.

5. The consistent interpretation method of claim 2 further comprising arranging a highest frequency component carrier as a first component carrier in the first common set when the specific order is the frequency decreasing order.

6. The consistent interpretation method of claim 2 further comprising arranging a first deployed component carrier as a first component carrier in the first common set when the specific order is the deployment order.

7. The consistent interpretation method of claim 1 further comprising removing an unused component carrier from the first common set, wherein the unused component carrier is no long be used by a mobile device or a network and the CIF value mapping to the removed CC can be left unused or assigned to another component carrier.

8. The consistent interpretation method of claim 1 further comprising building up a second common set when the number of component carries exceeds the maximum number that the first common set can accommodate.

9. The consistent interpretation method of claim 8, wherein the second common set and the first common set are formed according to frequency bands.

10. The consistent interpretation method of claim 1 further comprising mapping the CIF to the plurality of component carriers, wherein the CIF is mapped to the first common set according to an ascending order of the CIF values.

11. The consistent interpretation method of claim 1 further comprising mapping the CIF to the plurality of component carriers, wherein the CIF is mapped to the first common set according to an ascending order of the CIF values and an offset.

12. The consistent interpretation method of claim 1 further comprising mapping the CIF to the plurality of component carriers, wherein the CIF is mapped to the first common set according to two's complement.

13. The consistent interpretation method of claim 1 further comprising mapping the CIF to the plurality of component carriers, wherein the CIF is mapped to the first common set according to two's complement and an offset.

14. A wireless communication system comprising:
means for building up a first common set of a plurality of component carriers according to a specific order; and
means for addressing the plurality of component carriers between a mobile station and a base station according to the first common set;
wherein, one CIF value corresponds to one of the plurality component carriers or be left unused.

15. The wireless communication system of claim 14, wherein the specific order is an activation order, a frequency order, a deployment order or an operator's preference order.

16. The wireless communication system of claim 15 further comprising means for arranging a first enabled component carrier as a first component carrier in the first common set when the specific order is the activation order.

17. The wireless communication system of claim 15 further comprising means for arranging a lowest frequency component carrier as a first component carrier in the first common set when the specific order is the frequency increasing order.

18. The wireless communication system of claim 15 further comprising means for arranging a highest frequency component carrier as a first component carrier in the first common set when the specific order is the frequency decreasing order.

19. The wireless communication system of claim 15 further comprising means for arranging a first deployed component carrier as a first component carrier in the first common set when the specific order is the deployment order.

20. The wireless communication system of claim 14 further comprising means for removing an unused component carrier from the first common set, wherein the unused component carrier is no long be used by a mobile device or a network and the CIF value mapping to the removed CC can be left unused or assigned to another component carrier.

21. The wireless communication system of claim 14 further comprising means for building up a second common set when the number of component carries exceeds the maximum number that the first common set can accommodate.

22. The wireless communication system of claim 21, wherein the second common set and the first common set are formed according to frequency bands.

23. The wireless communication system of claim 14 further comprising meas for mapping the CIF to the plurality of component carriers, wherein the CIF is mapped to the first common set according to an ascending order of the CIF values.

24. The wireless communication system of claim 14 further comprising means for mapping the CIF to the plurality of component carriers, wherein the CIF is mapped to the first common set according to an ascending order of the CIF values and an offset.

25. The wireless communication system of claim 14 means for further comprising mapping the CIF to the plurality of component carriers, wherein the CIF is mapped to the first common set according to two's complement.

26. The wireless communication system of claim 14 further comprising means for mapping the CIF to the plurality of component carriers, wherein the CIF is mapped to the first common set according to two's complement and an offset.
